# FASCICULE DE BREVET EUROPEEN

(11) **EP 2 419 616 B1**
(45) Date de publication et mention de la délivrance du brevet: **06.06.2018**
(21) Numéro de dépôt: 10713964.4
(22) Date de dépôt: 15.04.2010
(51) Int. Cl.: F02C 7/06, F01D 25/16, F02K 3/02

(54) **MOTEUR À TURBINE À GAZ À DOUBLE CORPS POURVU D'UN PALIER INTER-ARBRES**
ZWEI-WELLEN-GASTURBINEN TRIEBWERK MIT ZWISCHENWELLENLAGER
DOUBLE SPOOL GAS TURBINE ENGINE PROVIDED WITH AN INTER-SHAFT BEARING

(30) Priorité: 17.04.2009 FR 0952515
(43) Date de publication de la demande: 22.02.2012
(73) Titulaire: Safran Aircraft Engines, 75015 Paris (FR)
(72) Inventeur: BART, Jacques, René, F-91450 Soisy Sur Seine (FR); ESCURE, Didier, René, André, F-77176 Nandy (FR); GASTINEAU, Ornella, F-75010 Paris (FR)
(74) Mandataire: Gevers & Orès
(86) Numéro de dépôt international: PCT/EP2010/055003
(87) Numéro de publication internationale: WO 2010/119115

(56) Documents cités:
- EP-A- 0 389 353
- EP-A- 1 396 611
- EP-A- 1 703 085
- EP-A1- 0 335 779
- EP-A1- 1 316 676
- EP-A1- 1 757 777
- FR-A1- 2 484 574
- FR-A1- 2 535 789
- US-A1- 2001 009 592

## Description

La présente invention concerne les moteurs à turbine à gaz, notamment à application aéronautique, comprenant un corps à basse pression et un corps à haute pression. Elle vise l'agencement des paliers supportant, à l'intérieur du carter du moteur, les arbres BP et HP et plus particulièrement les paliers aval.

Un moteur à turbine à gaz à double corps comprend un premier ensemble rotatif, dit corps à basse pression, BP, formé d'un arbre reliant un compresseur BP à l'amont, l'amont et l'aval étant définis par rapport à l'écoulement de l'air dans la machine, et une turbine BP à l'aval. Chacun des éléments de compresseur et de turbine peut être composé d'un ou d'une pluralité d'étages. Les deux éléments BP sont espacés axialement l'un de l'autre et ménagent un emplacement pour un second ensemble rotatif, dit corps à haute pression, HP, formé d'un compresseur HP, disposé en aval du compresseur BP, et d'une turbine HP disposée en amont de la turbine BP. Le compresseur HP et la turbine HP sont reliés mécaniquement l'un à l'autre par un organe de liaison en forme de tambour. La chambre de combustion du moteur, fixe par rapport aux deux corps, est annulaire et logée circonférentiellement autour dudit tambour. Elle reçoit l'air comprimé successivement par les compresseurs des étages BP et des étages HP, et délivre des gaz de combustion à haute énergie aux étages de turbine HP et BP successivement. Le moteur peut comprendre un rotor de soufflante à l'avant entraîné par l'arbre du corps BP. D'autres agencements sont connus.

Les documents EP 1316676 A1 et EP 0389353 A1 représentent deux exemples de moteurs à double corps de l'art antérieur. Un moteur connu tel que le CFM56 comprend des éléments de carter structuraux supportant notamment les ensembles rotatifs par des paliers. A l'amont, un élément de carter, dit carter intermédiaire, comprend un moyeu supportant l'arbre BP par l'intermédiaire d'un palier BP amont. A l'aval un élément de carter, dit carter d'échappement, comprend également un moyeu supportant l'arbre BP par l'intermédiaire d'un palier BP aval. Le corps HP est supporté par l'arbre BP à l'aval au moyen d'un palier inter-arbres.

Un moteur monté sur un aéronef subit des charges dynamiques transversales quand ce dernier effectue des manoeuvres de changement de direction. Avec un tel agencement des paliers et pour des réalisations de moteur notamment dont la longueur est importante par rapport à la finesse de l'arbre du corps basse pression BP, le présent déposant a analysé le comportement des rotors HP et BP quand le moteur est soumis à de telles charges de manoeuvre. Le déplacement transversal des rotors le long de l'axe moteur est un paramètre critique dans la mesure où ce déplacement a une influence directe sur les consommations de jeux en extrémité des aubes avec les anneaux de stator. Les jeux doivent être maintenues à des valeurs faibles si on souhaite conserver des performances optimales.

Le déposant s'est donc fixé comme objectif de réduire les jeux radiaux en bout d'aubes des rotors de compresseur et de turbine sous charges de manoeuvre.

Plus particulièrement le déposant s'est fixé comme objectif d'améliorer l'agencement des paliers supportant les rotors dans un moteur à turbine à gaz à double corps dans le but de réduire les déplacements transversaux le long de l'axe du moteur lorsque le moteur, monté sur un aéronef, subit des charges de manoeuvre.

On parvient à un tel objectif, conformément à l'invention, avec un moteur à turbine à gaz à double corps, comprenant un corps à basse pression, BP, et un corps à haute pression, HP, montés rotatifs autour d'un même axe dans un carter fixe du moteur, le corps basse pression présentant un compresseur BP et une turbine BP reliés par un arbre basse pression BP, ledit arbre BP étant supporté par un palier BP amont et un premier palier BP aval dans des éléments de carter structuraux, le corps HP étant supporté par un palier HP amont et un palier HP aval, ledit moteur étant caractérisé par le fait que l'arbre BP est supporté en aval, dans un élément de carter structural, par un palier BP aval supplémentaire.

Le palier BP aval supplémentaire permet d'assurer, en coopération avec le palier BP aval, un meilleur encastrement de l'arbre BP par rapport à l'élément de carter aval.

Conformément à une autre caractéristique, le palier BP aval supplémentaire est disposé en amont par rapport audit palier BP aval. Ainsi le palier BP aval supplémentaire est de diamètre supérieur à celui dudit palier BP aval.

Il est, notamment, aussi de diamètre supérieur à celui du palier HP aval, le palier HP aval étant un palier inter-arbres entre l'arbre BP et le rotor HP, le corps HP étant supporté par l'arbre BP.

Conformément à un mode de réalisation, le palier BP aval supplémentaire est disposé axialement entre le palier HP aval et le palier BP aval.

Conformément à un autre mode de réalisation, le palier HP aval et le palier BP aval supplémentaire sont disposés dans des plans transversaux respectifs proches l'un de l'autre.

Avantageusement, le palier BP aval et le palier BP aval supplémentaire étant supportés par le même élément de carter structural, ledit élément de carter structural présente des moyens de raidissement radial. Plus particulièrement, ledit élément de carter structural forme le carter structural d'échappement.

D'autres caractéristiques et avantages de l'invention apparaîtront à la lecture qui suit de la description d'un mode de réalisation de l'invention, donné à titre d'exemple non limitatif, en référence aux dessins annexés sur lesquels
La figure 1 représente schématiquement en demi-coupe axiale un moteur à turbine à gaz avec une soufflante avant, selon l'art antérieur,
La figure 2 représente plus en détail la partie aval du moteur de la figure 1,
La figure 3 représente, vue en demi-coupe axiale, la partie arrière du moteur comportant un palier BP aval supplémentaire conforme à l'invention,
La figure 4 représente, la circulation de l'air de ventilation de l'enceinte de palier selon l'invention,
La figure 5 représente une variante d'agencement des paliers selon l'invention.

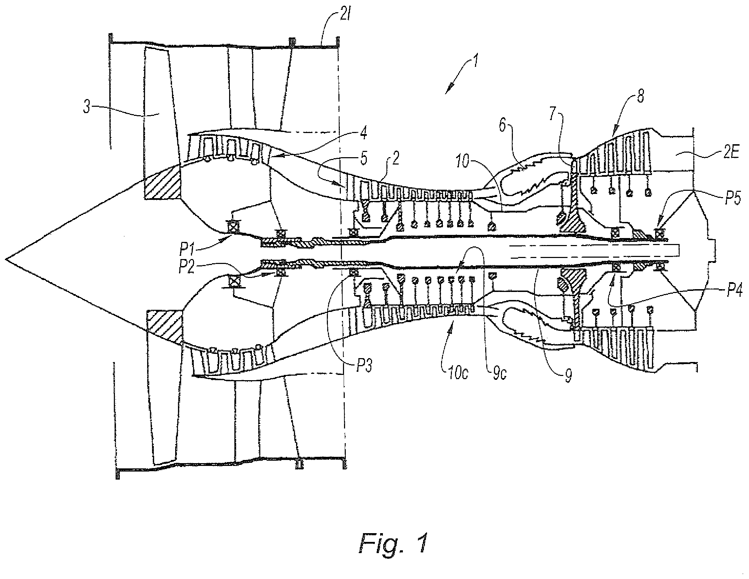

Le moteur à turbine à gaz 1 de la figure 1 comprend à l'intérieur d'un carter et de l'amont vers l'aval, une soufflante avant 3 dont une partie du flux d'air qu'elle comprime est éjectée dans l'atmosphère et une partie radialement intérieure est guidée à travers le moteur. Celui comprend successivement une pluralité d'étages de compresseur formant le compresseur basse pression, BP, 4. Puis les étages du compresseur haute pression HP, 5. L'air pénètre dans un diffuseur par lequel il est admis dans la chambre de combustion 6. En aval de la chambre de combustion les gaz de combustion sont guidés au travers de la turbine haute pression HP 7 puis dans les étages de la turbine basse pression BP 8 ; enfin les gaz sont éjectés dans l'atmosphère par une tuyère d'éjection non représentée.

Structurellement, le rotor du compresseur BP 4 et celui de la turbine BP 8 sont reliés mécaniquement par un arbre BP 9 formant ainsi le corps BP 9C. Le rotor du compresseur HP 5 et le rotor de la turbine HP 7 forment ensemble avec le tambour 10 qui les relie mécaniquement, le corps HP 10C. Le carter 2, dans lequel sont montés les deux corps BP et HP, 9C et 10C, comprend une pluralité d'éléments dont pour ce qui concerne la présente invention, un élément de carter amont, dit carter intermédiaire 21, et un élément de carter aval, dit carter d'échappement 2E. Ces deux éléments de carter sont structuraux dans la mesure où les efforts entre le moteur et la structure de l'aéronef transitent par eux. Ils sont formés d'un moyeu central et de bras radiaux traversant la veine de gaz reliant le moyeu à une virole externe.

Les ensembles rotatifs sont supportés dans les moyeux par un ensemble de paliers ; l'arbre BP 9 est relié ici à l'arbre de soufflante qui est supporté par un palier P1. L'arbre BP 9 est supporté à l'amont par un palier P2. Ces deux paliers P1 et P2 sont eux-mêmes supportés par le carter intermédiaire 2I. L'arbre BP est supporté à l'aval par un palier désigné P5, lui-même monté sur le carter d'échappement 2E. Le corps HP 10C est supporté par l'arbre BP 9 par l'intermédiaire du palier inter-arbres P4, à l'aval. Il est supporté à l'amont par le palier P3 monté dans le carter intermédiaire.

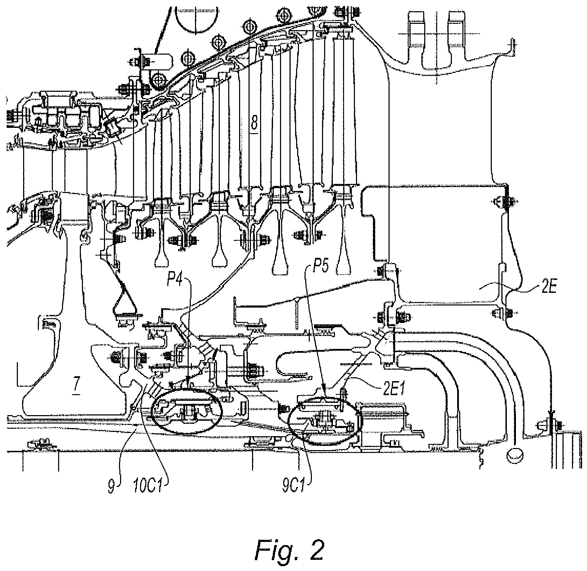

On voit sur la figure 2 plus en détail, la partie arrière du moteur. L'arbre 9 du corps BP 9C traverse le disque de la turbine HP 7. Il est supporté par le palier P5 dans un élément de forme tronconique 2E1 du moyeu du carter d'échappement 2E. Il comprend une cage avec des roulements maintenue entre une piste intérieure solidaire d'un tourillon d'extrémité 9C1 de l'arbre BP 9 et une piste extérieure solidaire de l'élément de moyeu tronconique 2E1. Le rotor de la turbine BP 8 est solidaire de l'arbre BP 9

Plus en amont, le palier inter-arbres P4 comprend une cage avec des roulements montée entre une piste intérieure solidaire de l'arbre BP 9 et une piste extérieure solidaire d'un tourillon 10C1 en extrémité du corps HP 10C et plus particulièrement rattaché à une bride du disque de turbine HP 7.

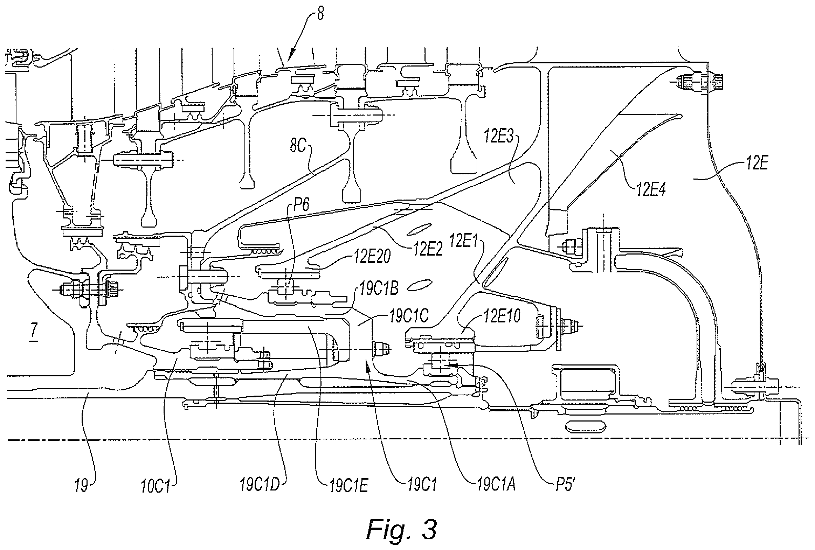

On décrit maintenant, en référence à la figure 3 un mode de réalisation de l'invention qui est dérivé de l'agencement de palier de l'art antérieur illustré par la figure 2.

Sur cette figure 3, les turbines HP 7 et BP 8 sont inchangées par rapport à la figure 2. L'arbre BP a la référence 19. Il présente du côté de son extrémité aval un tourillon 19C1 qui est ici rapporté mais qui pourrait aussi être monobloc avec l'arbre BP. Le tourillon comprend une partie 19C1A qui est dans le prolongement de l'arbre BP 19 et sensiblement de même diamètre. Il comprend une autre partie 19C1B, de plus grand diamètre, rattachée par une portion radiale 19C1C à la première partie 19C1A de tourillon.

Le moyeu du carter d'échappement 12E comprend deux portions tronconiques 12E1 et 12E2 formant supports de deux paliers P5' et P6 respectivement. Le palier P5' est disposé entre la partie 19C1A du tourillon de l'arbre BP 19 et la portion tronconique 12E1. Il comprend une cage de roulements montée entre une piste ou bague intérieure solidaire de la partie 19C1A de tourillon et une piste ou bague extérieure solidaire d'un prolongement cylindrique 12E10 de la portion tronconique 12E1 du moyeu de carter d'échappement.

Le palier P6 est monté entre la partie cylindrique 19C1B de plus grand diamètre du tourillon 19C1 et un prolongement cylindrique 12E20 de la portion tronconique 12E2 du moyeu de carter d'échappement. Des nervures de raidissement, dans des plans longitudinaux radiaux 12E3 et réparties autour de l'axe du moteur, sont ménagées entre les deux portions tronconiques de manière à renforcer la résistance aux efforts radiaux auxquels ces deux portions tronconiques sont soumises à leur extrémité amont. Le moyeu comprend également des nervures 12E4 longitudinales et radiales réparties autour de l'axe du moteur.

Le tourillon 19C1 comprend une portion cylindrique 19C1D prolongeant la portion cylindrique 19C1A vers l'amont et glissée sur des surfaces d'appui extérieures de l'arbre 19. Le palier inter-arbre P4 est logé dans l'espace annulaire entre les deux portions cylindriques 19C1B et 19C1D. Ce palier comprend une cage de roulements montée entre une piste ou bague solidaire du tourillon 10C1 situé en extrémité aval du rotor HP 10C et une piste ou bague extérieure solidaire d'une bague 19C1E, elle-même montée sur le tourillon 19C1 à l'intérieur de la portion cylindrique 19C1B.

Comme on peut le voir sur la figure 3, le tourillon 10C1 est fixé à une bride aval du disque de turbine HP 7. Le tourillon 19C1 de l'arbre BP 19 est boulonné, par une bride radiale extérieure à la portion cylindrique 19C1B, à un cône 8C rattaché à l'un des disques du rotor de turbine BP 8. Le rotor de turbine BP est ici constitué de quatre disques de turbine assemblés en un seul bloc de turbine.

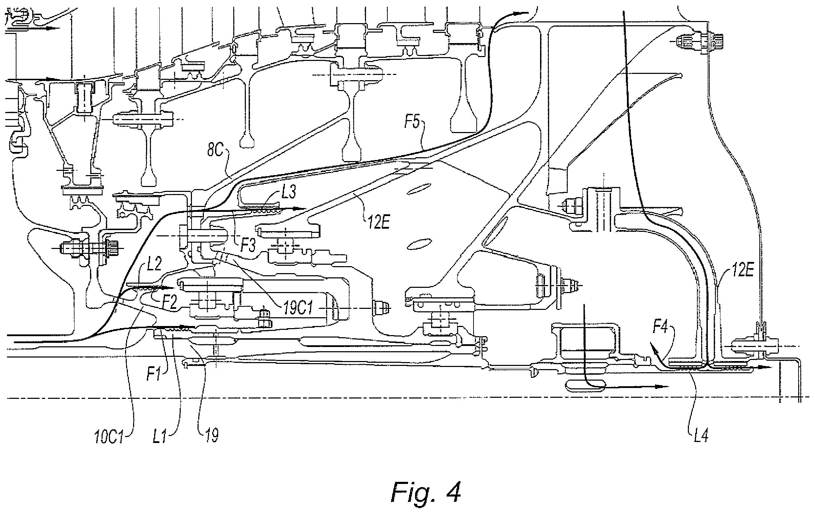

La lubrification est montrée sur la figure 4. Une enceinte pour l'huile de lubrification est ménagée par des joints à labyrinthe disposés entre les parties mobiles entre elles.

Ainsi à l'amont de l'ensemble des paliers P4, P5' et P6, on trouve les joints à labyrinthe L1 entre le tourillon 10C1 du rotor HP et l'arbre BP 10, L2 entre le tourillon 10C1 et le tourillon 19C1 de l'arbre BP 19, L3 entre le cône 8C du rotor de turbine BP et le moyeu du carter d'échappement 12E. A l'aval le joint à labyrinthe L4 ferme l'enceinte entre l'arbre BP 19 et le moyeu du carter d'échappement 12E.

Les flèches F1, F2, F3, F4 et F5 illustrent la circulation d'air de pressurisation prélevé en amont par lequel l'enceinte des paliers est maintenue pressurisée par rapport à la pression régnant dans les étages de turbine basse pression. L'huile admise par des conduits appropriés est projetée sur les roulements des paliers comme cela est connu en soi et est évacuée par l'intérieur de l'arbre BP 19 qui comprend un déshuileur non représenté.

Dans cette version, on a cherché à conserver les pièces existantes par rapport au moteur de l'art antérieur de manière à devoir en modifier le moins possible. Notamment le palier inter-arbre P4 est monté sur le tourillon 10C1 qui n'a pas été modifié. Le palier P4 est ainsi en amont par rapport au palier P6.

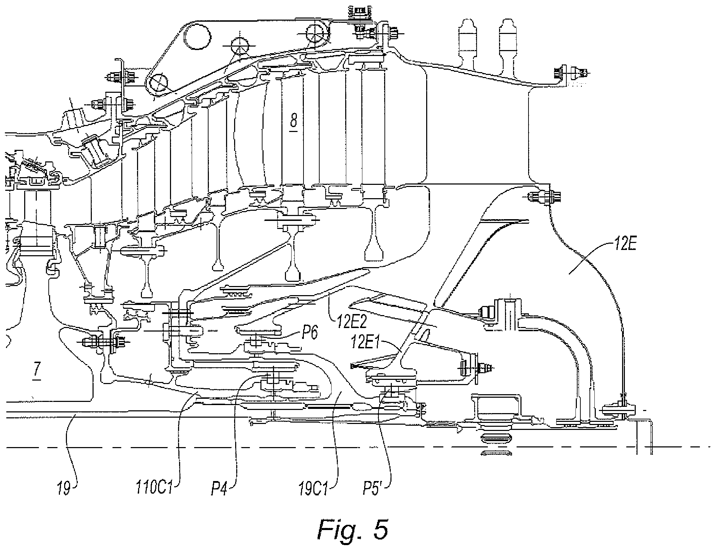

Conformément à une variante de réalisation représentée sur la figure 5, on déplace le palier P4 vers l'aval de manière à ce qu'il soit situé sensiblement dans le même plan transversal que le palier P6. Dans ce but on allonge le tourillon en extrémité du rotor HP. Ce tourillon est référencé 110C1 sur la figure 5. Le tourillon de l'arbre BP est également modifié par rapport à la solution de la figure 3.

La solution de l'invention est avantageuse par rapport à un art antérieur où le tourillon de tubine HP est disposé extérieurement par rapport au palier inter-arbres.

Dans ce dernier cas, le régime de fonctionnement de la turbine HP étant supérieur à celui de l'arbre de turbine BP monté intérieurement, entraîne un gonflement de cette pièce.

Afin de garantir un jeu normal de fonctionnement du roulement inter-arbres, il faut monter celui-ci fretté entre l'arbre de turbine BP et le tourillon de turbine HP.

Au montage lors de l'accostage de la turbine BP avec son arbre sur le module corps HP, il faut chauffer le tourillon de turbine HP équipé de la bague extérieure du roulement, afin qu'il se dilate et accepte la mise en place de l'arbre de turbine BP équipé de la bague intérieure et des éléments roulants de ce même roulement. Le montage est contraignant.

Avec la solution de l'invention, le tourillon de turbine HP se trouve disposé intérieurement par rapport au palier inter-arbres et l'arbre de turbine BP extérieurement de ce même roulement.

Ainsi contrairement à un montage de type de l'art antérieur, la turbine BP équipée de son arbre, lui-même équipé de la bague extérieure de roulement inter-arbres, est accostée sur le tourillon de turbine HP équipé de la bague intérieure et des éléments roulants du palier, avec du jeu. Il n'est donc pas nécessaire de procéder au chauffage du tourillon de turbine HP. Le montage en est facilité. Le jeu à froid est calculé afin de garantir le bon fonctionnement du roulement, en fonction des contraintes mécaniques et thermiques de l'ensemble et du fait que le régime du tourillon de turbine HP est supérieur à celui de l'arbre de turbine BP.

## Revendications

1. Moteur à turbine à gaz (1) à double corps, comprenant un corps basse pression BP (9C) et un corps haute pression HP (10C), montés rotatifs autour d'un même axe dans un carter fixe (2), le corps basse pression BP (9C) présentant un compresseur et une turbine reliés par un arbre basse pression BP (9) ledit arbre basse pression BP (9) étant supporté par un palier BP amont (P2), un premier palier BP aval (P5') et un palier BP aval supplémentaire (P6), lesdits paliers aval étant supportés par un moyeu de carter d'échappement (12E) du carter fixe (2), le corps haute pression HP (10C) étant supporté par un palier HP amont (P3) et un palier HP aval (P4), **caractérisé par le fait que** le palier HP aval (P4) est un palier inter-arbres comprenant une piste intérieure solidaire du rotor de turbine HP (10C) et une piste extérieure solidaire de l'arbre BP (9).

2. Moteur selon la revendication 1 dont le palier BP aval supplémentaire (P6) est disposé en amont par rapport audit palier BP aval (P5').

3. Moteur selon l'une des revendications 1 ou 2 dont le palier BP aval supplémentaire (P6) est de diamètre supérieur à celui dudit palier BP aval (P5').

4. Moteur selon la revendication 3 dont le palier BP aval supplémentaire (P6) est de diamètre supérieur à celui du palier HP aval (P4).

5. Moteur selon la revendication 4 dont le palier BP aval supplémentaire (P6) est axialement disposé entre le palier HP aval (P4) et le palier BP aval (P5').

6. Moteur selon la revendication 4 ou 5, dont le palier HP aval (P4) et le palier BP aval supplémentaire (P6) sont disposés dans des plans transversaux par rapport à l'axe du moteur, respectifs proches l'une de l'autre.

7. Moteur selon l'une des revendications précédentes dont, le palier BP aval (P5') et palier BP aval supplémentaire (P6) étant supportés par le même élément de carter structural (2E), ledit carter structural présente des moyens de raidissement radial (2 E2, 2 E3).

8. Moteur selon la revendication précédente dont ledit élément de carter structural forme le carter structural d'échappement (2 E).

## Patentansprüche

1. Zweikörper-Gasturbinentriebwerk (1), umfassend einen Niederdruck-ND-Körper (9C) und einen Hochdruck-HD-Körper (10C), die drehend um eine gleiche Achse in einem festsitzenden Gehäuse (2) angebracht sind, wobei der Niederdruck-ND-Körper (9C) einen Verdichter und eine Turbine aufweist, die durch eine Niederdruck-ND-Welle (9) verbunden sind, wobei die Niederdruck-ND-Welle (9) von einem stromaufwärts liegenden ND-Lager (P2), einem ersten stromabwärts liegenden ND-Lager (P5') und einem zusätzlichen stromabwärts liegenden ND-Lager (P6) getragen wird, wobei die stromabwärts liegenden Lager von einer Nabe eines Abgasgehäuses (12E) des festsitzenden Gehäuses (2) getragen werden, wobei der Hochdruck-HD-Körper (10C) von einem stromaufwärts liegenden HD-Lager (P3) und einem stromabwärts liegenden HD-Lager (P4) getragen wird, **dadurch gekennzeichnet, dass** das stromabwärts liegende HD-Lager (P4) ein Zwischenwellenlager ist, das eine Innenspur, die fest mit dem Rotor der HD-Turbine (10C) verbunden ist, und eine Außenspur, die fest mit der ND-Welle (9) verbunden ist, umfasst.

2. Triebwerk nach Anspruch 1, wobei das zusätzliche stromabwärts liegende ND-Lager (P6) in Bezug auf das stromabwärts liegende ND-Lager (P5') stromaufwärts angeordnet ist.

3. Triebwerk nach einem der Ansprüche 1 oder 2, wobei das zusätzliche stromabwärts liegende ND-Lager (P6) einen Durchmesser aufweist, der größer ist als jener des stromabwärts liegenden ND-Lagers (P5').

4. Triebwerk nach Anspruch 3, wobei das zusätzliche stromabwärts liegende ND-Lager (P6) einen Durchmesser aufweist, der größer ist als jener des stromabwärts liegenden HD-Lagers (P4).

5. Triebwerk nach Anspruch 4, wobei das zusätzliche stromabwärts liegende ND-Lager (P6) axial zwischen dem stromabwärts liegenden HD-Lager (P4) und dem stromabwärts liegenden ND-Lager (P5') angeordnet ist.

6. Triebwerk nach Anspruch 4 oder 5, wobei das stromabwärts liegende HD-Lager (P4) und das zusätzliche stromabwärts liegende ND-Lager (P6) in Ebenen angeordnet sind, die in Bezug auf die Achse des Triebwerks quer verlaufen, jeweils nahe beieinander.

7. Triebwerk nach einem der vorstehenden Ansprüche, wobei, da das stromabwärts liegende ND-Lager (P5') und das zusätzliche stromabwärts liegende ND-Lager (P6) von dem gleichen Element des Strukturgehäuses (2E) getragen werden, das Strukturgehäuse Mittel zur radialen Versteifung (2 E2, 2 E3) aufweist.

8. Triebwerk nach dem vorstehenden Anspruch, wobei das Element des Strukturgehäuses das Abgasstrukturgehäuse (2 E) bildet.

## Claims

1. A twin-spool gas turbine engine (1) comprising a low-pressure LP spool (9C) and a high-pressure HP spool (10C), said spools being mounted so that they can rotate about the same axis in a fixed casing (2), the low-pressure LP spool (9C) having a compressor and a turbine which are connected by a low-pressure LP shaft (9), said low-pressure LP shaft (9) being supported by an upstream LP bearing (P2), a first downstream LP bearing (P5') and an additional downstream LP bearing (P6), said downstream bearings being supported by a hub of an exhaust casing (12E) of the fixed casing (2), the high-pressure HP spool (10C) being supported by an upstream HP bearing (P3) and a downstream HP bearing (P4), **characterized in that** the downstream HP bearing (P4) is an inter-shaft bearing comprising an inner raceway secured to the HP turbine rotor (10C) and an outer raceway secured to the LP shaft (9).

2. The engine as claimed in claim 1, in which the additional downstream LP bearing (P6) is located upstream of said downstream LP bearing (P5').

3. The engine as claimed in either of claims 1 and 2, in which the additional downstream LP bearing (P6) is of a diameter greater than that of said downstream LP bearing (P5').

4. The engine as claimed in claim 3, in which the additional downstream LP bearing (P6) is of a diameter greater than that of the downstream HP bearing (P4).

5. The engine as claimed in claim 4, in which the additional downstream LP bearing (P6) is positioned axially between the downstream HP bearing (P4) and the downstream LP bearing (P5').

6. The engine as claimed in claim 4 or 5, in which the downstream HP bearing (P4) and the additional downstream LP bearing (P6) are positioned in respective planes that are transverse with respect to the axis of the engine and are close to one another.

7. The engine as claimed in one of the preceding claims, in which, with the downstream LP bearing (P5') and the additional downstream LP bearing (P6) being supported by the same structural casing element (2E), said structural casing has radial-stiffening means (2E2, 2E3).

8. The engine as claimed in the preceding claim, in which said structural casing element forms the structural exhaust casing (2E).
